# EUROPEAN PATENT APPLICATION

(11) **EP 4 608 050 A1**
(43) Date of publication of application: **27.08.2025**
(21) Application number: 22962451.5
(22) Date of filing: 21.10.2022
(51) Int. Cl.: H04W 76/00

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2022/126689
(87) International publication number: WO 2024/082267

(57) **Abstract**

A wireless communication method and a device. The method is applied to a first device. The first device does not perform energy collection and communication simultaneously. The method comprises: the first device communicates with a second device according to a first time-domain resource, the first time-domain resource being a preset time-domain resource, and the first device obtains, by means of energy collection, energy for communication.

## Description

### TECHNICAL FIELD

Embodiments of the disclosure relate to the field of communications, and more particular to a method and device for wireless communication.

### BACKGROUND

In a zero-power communication, a zero-power device needs to harvest power to drive itself to operate for data transmission. As a result, a power storage of the zero-power device can affect the data transmission. Therefore, how to ensure communication between the zero-power device and another device is an urgent problem to be solved.

### SUMMARY

The disclosure provides a method and device for wireless communication, which are beneficial for ensuring a communication between a zero-power device and another device.

In a first aspect, a method for wireless communication is provided, which is applied to a first device. The first device does not simultaneously perform a power harvesting and a communication, and the method includes the following operations. The first device performs the communication with a second device based on a first time-domain resource. The first time-domain resource is a preset time-domain resource, and a power for the communication is obtained by the first device through the power harvesting.

In a second aspect, a method for wireless communication is provided, which includes the following operations. A second device performs a communication with a first device on a first time-domain resource. The first time-domain resource is a preset time-domain resource, a power for the communication is obtained by the first device through a power harvesting, and the power harvesting and the communication are not performed by the first device simultaneously.

In a third aspect, a communication device is provided for performing the method in the above first aspect or any of its various implementations.

Specifically, the communication device includes a functional module for performing the method in the above first aspect or any of its various implementations.

In a fourth aspect, a communication device is provided for performing the method in the above second aspect or any of its various implementations.

Specifically, the communication device includes a functional module for performing the method in the above second aspect or any of its various implementations.

In a fifth aspect, a communication device is provided, which includes a processor and a memory. The memory is configured to store a computer program, and the processor is configured to call the computer program from the memory and run the computer program, to perform the method in the above first aspect or any of its various implementations.

In a sixth aspect, a communication device is provided, which includes a processor and a memory. The memory is configured to store a computer program, and the processor is configured to call the computer program from the memory and run the computer program, to perform the method in the above second aspect or any of its various implementations.

In a seventh aspect, a chip is provided for implementing the method in the above first or the above second aspect, or any of their various implementations.

Specifically, the chip includes a processor configured to call a computer program from a memory and run the computer program, to cause a device equipped with the chip to perform the method in the above first or the above second aspect, or any of their various implementations.

In an eighth aspect, a computer-readable storage medium is provided for storing a computer program. The computer program causes a computer to perform the method in the above first or the above second aspect, or any of their various implementations.

In a ninth aspect, a computer program product is provided, which includes computer program instructions that cause a computer to perform the method in the above first or the above second aspect, or any of their various implementations.

In a tenth aspect, a computer program is provided. When the computer program is executed on a computer, the computer is caused to perform the method in the above first or the above second aspect, or any of their various implementations.

In the above technical solution, the first device can perform the communication with the second device based on the preset first time-domain resource. That is, when the first device and the second device need to communicate with each other, there is an explicit time-domain resource available, rather than using a blind transmission and blind reception mode for the communication, which is beneficial for reducing wastage of a power and a resource caused by using the blind transmission and blind reception mode.

### BRIEF DESCRIPTION OF THE DRAWINGS

FIG. 1 is a schematic diagram illustrating a communication system architecture according to an embodiment of the disclosure.
FIG. 2 is a schematic diagram illustrating a zero-power communication system according to an example of the disclosure.
FIG. 3 is a schematic diagram illustrating a power harvesting according to an embodiment of the disclosure.
FIG. 4 is a schematic diagram illustrating a back-scattering communication according to an embodiment of the disclosure.
FIG. 5 is a schematic diagram illustrating a resistive load modulation circuit according to an embodiment of the disclosure.
FIG. 6 is a schematic diagram illustrating a method for wireless communication according to an embodiment of the disclosure.
FIG. 7 is a schematic diagram illustrating a state switching performed based on a time switch according to an embodiment of the disclosure.
FIG. 8 is a schematic diagram illustrating a signal transmission based on spatial information according to an embodiment of the disclosure.
FIG. 9 is a schematic diagram illustrating a communication between a first device and a second device according to an embodiment of the disclosure.
FIG. 10 is a schematic block diagram of a communication device according to an embodiment of the disclosure.
FIG. 11 is a schematic block diagram of another communication device according to an embodiment of the disclosure.
FIG. 12 is a schematic block diagram of yet another communication device according to an embodiment of the disclosure.
FIG. 13 is a schematic block diagram of a chip according to an embodiment of the disclosure.
FIG. 14 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions in the embodiments of the disclosure may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, a New Radio (NR) system, an evolved NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), a Wireless Fidelity (WiFi), a 5th-Generation (5G) system, a cellular Internet of Things (IoT) system, a cellular passive IoT system or other communication systems.

In general, a traditional communication system supports a limited number of connections and is easy to be implemented. However, with the development of communication technologies, a mobile communication system will not only support the traditional communication, but also support, for example, a Device to Device (D2D) communication, a Machine to Machine (M2M) communication, a Machine Type Communication (MTC), a Vehicle to Vehicle (V2V) communication, or a Vehicle to everything (V2X) communication, etc. The embodiments of the disclosure may also be applied to these communication systems.

Optionally, the communication system in the embodiments of the disclosure may be applied to a Carrier Aggregation (CA) scenario, a Dual Connectivity (DC) scenario, or a Standalone (SA) network deployment scenario.

Optionally, the communication system in the embodiments of the disclosure may be applied to an unlicensed spectrum, where the unlicensed spectrum may also be regarded as a shared spectrum. Alternatively, the communication system in the embodiments of the disclosure may also be applied to a licensed spectrum, where the licensed spectrum may also be regarded as a non-shared spectrum.

The embodiments of the disclosure describe various implementations in combination with a network device and a terminal device. The terminal device may be referred to as User Equipment (UE), an access terminal, a user unit, a user station, a mobile station, a mobile platform, a remote station, a remote terminal, a mobile device, a user terminal, a terminal, a wireless communication device, a user agent, a user device or the like.

In the embodiments of the disclosure, the network device may be a device for communicating with a mobile device. The network device may be an Access Point (AP) in WLAN, a Base Transceiver Station (BTS) in GSM or CDMA, a NodeB (NB) in WCDMA, an Evolved Node B (eNB or eNodeB) in LTE, a relay station or an access point, or a vehicle-mounted device, a wearable device, a network device (gNB) in an NR network, or a network device in a cellular IoT, or a network device in a cellular passive IoT, or a network device in a future evolved Public Land Mobile Network (PLMN) network, or a network device in a NTN network or the like.

In the embodiments of the disclosure, as an example rather than a limitation, the network device may have mobility characteristics. For example, the network device may be a mobile device. Optionally, the network device may be a satellite or a balloon station. For example, the satellite may be a low-Earth orbit (LEO) satellite, a medium-Earth orbit (MEO) satellite, a geostationary Earth orbit (GEO) satellite, a high elliptical orbit (HEO) satellite and the like. Optionally, the network device may further be a base station arranged on land, water and the like.

In the embodiments of the disclosure, the network device may provide a service for a cell, and the terminal device communicates with the network device through transmission resources (e.g., frequency-domain resources, or spectrum resources) used by the cell. The cell may be a cell corresponding to the network device (e.g., the base station), and the cell may belong to a macro base station or belong to a base station corresponding to a small cell. The small cell may include: a Metro cell, a Micro cell, a Pico cell, a Femto cell and the like. These small cells have the characteristics of a small coverage and a low transmission power, and are suitable for providing a high-speed data transmission service.

The terminal device may be a station (ST) in WLAN, a cellular telephone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in a next generation communication system such as an NR network, a terminal device in a future evolved PLMN, a terminal device in a cellular IoT, a terminal device in a cellular passive IoT or the like.

In the embodiments of the disclosure, the terminal device may be deployed on land including indoor or outdoor, hand-held, wearable or vehicle-mounted, may also be deployed on a water surface (e.g., ships), or may further be deployed in the air (e.g., airplanes, balloons, satellites and the like).

In the embodiments of the disclosure, the terminal device may be a Mobile Phone, a Pad, a computer with a wireless transceiver function, a Virtual Reality (VR) terminal device, an Augmented Reality (AR) terminal device, a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, a wireless terminal device in a smart home, or the like.

In the embodiments of the disclosure, as an example rather than a limitation, the terminal device may further be a wearable device. The wearable device, known as a wearable smart device, is a collective term of wearable devices which are developed by using wearable technology to intelligently design daily wearable items, such as glasses, gloves, watches, clothing and shoes. The wearable device is a portable device that is worn directly on the body or integrated into the clothes or accessories of a user. The wearable device is not only a hardware device, but also can realize a powerful function through software support, data interaction and cloud interaction. Broadly speaking, the wearable smart devices include, for example, smart watches or smart glasses, which have full functions, large size, and may realize complete or partial functions without relying on smart phones, and various smart bracelets and smart jewelry for physical sign monitoring, which only focus on a certain type of an application function and need to be used in conjunction with other devices such as smart phones.

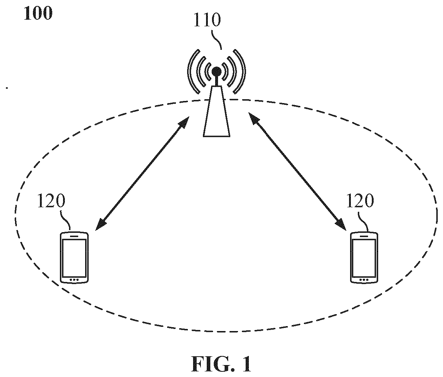

Illustratively, a communication system 100 to which an embodiment of the disclosure is applied is illustrated in FIG. 1. The communication system 100 may include a network device 110, which may be a device that communicates with a terminal device 120 (or referred to as a communication terminal, or a terminal). The network device 110 may provide communication coverage for a particular geographic area and may communicate with terminal devices located in the coverage area.

FIG. 1 schematically illustrates one network device and two terminal devices. Optionally, the communication system 100 may include multiple network devices and other numbers of terminal devices may be included in the coverage range of each network device, which is not limited by the embodiments of the disclosure.

Optionally, the communication system 100 may further include other network entities such as a network controller and a Mobility Management Entity (MME), which is not limited by the embodiments of the disclosure.

It should be understood that a device with a communication function in a network/system in the embodiments of the disclosure may be referred to as a communication device. For example, in the communication system 100 illustrated in FIG. 1, the communication device may include the network device 110 and the terminal device 120 with communication functions. The network device 110 and the terminal device 120 may be specific devices in the context of the disclosure, which will not be repeated here. The communication device may further include other devices in the communication system 100, for example, a network controller, an MME and other network entities, which are not limited in the embodiments of the disclosure.

It should be understood that the terms "system" and "network" used herein are often used interchangeably. The term "and/or" is used herein to describe an association between associated objects and represents that three relationships may exist between the associated objects. For example, A and/or B may represent three conditions: independent existence of A, existence of both A and B and independent existence of B. In addition, the character "/" used herein usually represents that the associated objects before and after the character "/" form an "or" relationship.

It should be understood that the "indication" mentioned in the embodiments of the disclosure may be a direct indication, an indirect indication, or a representation of an association. For example, A indicates B, which may represent that A directly indicates B, for example, B may be obtained through A; A indicates B, which may also represent that A indirectly indicates B, for example, A indicates C, and B may be obtained through C; or, A indicates B, which may further represent that there is an association between A and B.

In the description of the embodiments of the disclosure, the term "corresponding to" may represent a direct correspondence or an indirect correspondence between two items, may also represent an association between the two items, or may further be a relationship such as indication and being indicated, configuration and being configured or the like.

In the embodiments of the disclosure, "predefinition/predefine" may be implemented by prestoring corresponding codes, or tables in devices (e.g., including terminal devices and network devices) or by other ways that may be used to indicate related information, and the specific implementation thereof is not limited herein. For example, the predefinition may refer to what is defined in a protocol.

In the embodiments of the disclosure, the "protocol" may refer to standard protocols in the communication field, including such as an LTE protocol, a NR protocol, and related protocols to be applied in a future communication system, which are not limited herein.

In order to facilitate understanding of the technical solutions in the embodiments of the disclosure, the related art about the disclosure is described below.

### I. Zero-power Communication

In recent years, the application of zero-power devices has become increasingly widespread. A typical zero-power device is Radio Frequency Identification (RFID), which is a technology that employs spatial coupling of Radio Frequency (RF) signals to realize automatic transmission and identification of tag information without contact. A RFID tag is also called a "RF tag" or "electronic tag". The electronic tags are classified based on different power supply modes, and the types of electronic tags may include an active electronic tag, a passive electronic tag, and a semi-passive electronic tag. The active electronic tag, also known as a powered electronic tag, is powered by a battery. The battery, a memory and an antenna together constitute the active electronic tag. Unlike an activation mode of a passive RF, the active electronic tag continuously transmits information through a preset frequency band until the battery is replaced. The passive electronic tag, also known as a no-powered electronic tag, does not support a built-in battery. When the passive electronic tag approaches a reader-writer, the tag is within a near-field range formed by radiation of an antenna of the reader-writer, an antenna of the electronic tag generates an induced current through electromagnetic induction, and the induced current drives a chip circuit of the electronic tag. The chip circuit transmits identification information stored in the tag to the reader-writer through the antenna of the electronic tag. The semi-active electronic tag inherits advantages of the passive electronic tag such as a small size, a light weight, a low price and a long service life. A built-in battery only provides the power for a few circuits in the chip when there is no reader-writer access. Only when the reader-writer accesses, the built-in battery supplies power to the RFID chip, so as to increase a read-write distance of the tag and improve a reliability of the communication.

A most basic RFID system is composed of two parts: the electronic tag and the reader-writer. The electronic tag is composed of a coupling component and the chip, and each electronic tag has a unique electronic code. The electronic tag is placed on a to-be-measured target to realize a purpose for marking a target object. The reader-writer can not only read the information from the electronic tag but also write the information into the electronic tag, and further provide the electronic tag with a power needed for the communication. When the electronic tag enters an electromagnetic field, the electronic tag receives a RF signal from the reader-writer. The passive electronic tag or the no-powered electronic tag obtains the power using the electromagnetic field generated in the space, and transmits information stored in the electronic tag. The reader-writer reads the information and decodes it to identify the electronic tag.

Communication based on the zero-power device is referred to as the zero-power communication for short.

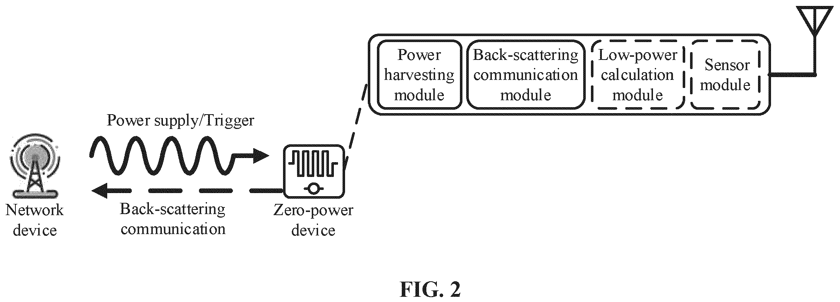

As illustrated in FIG. 2, a typical zero-power communication system (e.g., a RFID system) includes a network device (e.g., a reader-writer of the RFID system) and a zero-power device (e.g., the electronic tag). The network device is used for transmitting a wireless power signal and a downlink communication signal to the zero-power device, and is further used for receiving a back-scattering signal from the zero-power device. Optionally, the zero-power device includes a power harvesting module, a back-scattering communication module and a low-power calculation module. In addition, the zero-power device can also have a memory or a sensor for storing some basic information (e.g., item identification, etc.) or sensing data such as an ambient temperature and an ambient humidity.

For example, the power harvesting module can harvest the power from radio waves in space (as illustrated in FIG. 2, the radio waves emitted by the network device) to drive the low-power calculation module of the zero-power device and implement a back-scattering communication. After obtaining the power, the zero-power device may receive a control command from the network device and transmit data to the network device based on the control signaling using a back-scattering mechanism. The transmitted data can be the data stored in the zero-power device itself (e.g., an identity, or pre-written information such as a production date, a brand, a manufacturer of a product, etc.). The zero-power device can also be loaded with various sensors, so as to report the data harvested by various sensors based on the zero-power mechanism.

Key technologies in the zero-power communication will be described below.

### 1. RF Power Harvesting

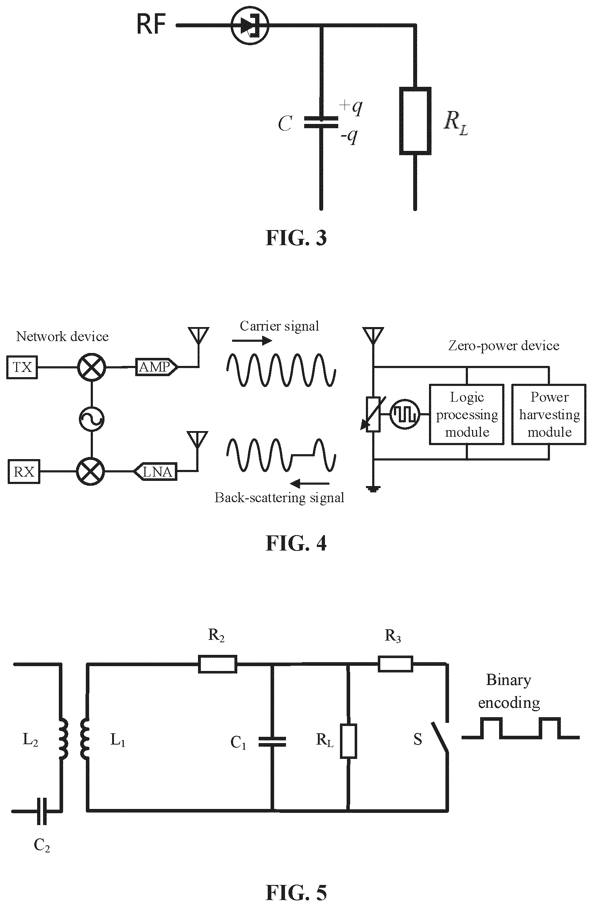

As illustrated in FIG. 3, a RF power harvesting module harvests the power from space electromagnetic waves based on a principle of the electromagnetic induction, thereby obtaining the power required to drive the operation of the zero-power device, such as driving low-power demodulation and modulation modules, sensors, and to read the memory. Therefore, the zero-power device does not need the traditional battery.

### 2. Back-Scattering Communication

As illustrated in FIG. 4, the zero-power device receives a carrier signal from the network device, modulates the carrier signal, loads information to be transmitted, and radiates the modulated signal from the antenna. Such information transmission process is called the back-scattering communication. A back-scattering function is inseparable from a load modulation function. The load modulation adjusts and controls circuit parameters of a oscillation loop of the zero-power device based on a rhythm of a data stream, so that the parameters such as an impedance of the zero-power device change accordingly, thereby completing a modulation process. A load modulation technology mainly includes a resistive load modulation and a capacitive load modulation. In the resistive load modulation, a resistor is connected in parallel to the load, which is turned on or turned off based on a control of a binary data stream, as illustrated in FIG. 5. The on-off of the resistor will cause a change of a circuit voltage, thereby realizing Amplitude Shift Keying (ASK). That is, the modulation and transmission of a signal can be realized by adjusting an amplitude of the back-scattering signal of the zero-power device. Similarly, in the capacitive load modulation, a resonant frequency of a circuit can be changed by turning on and off the capacitor, thereby realizing Frequency Shift Keying (FSK). That is, the modulation and transmission of the signal can be realized by adjusting an operation frequency of the back-scattering signal of the zero-power device.

It can be seen that the zero-power device modulates an incoming signal through the load modulation, thereby realizing a back-scattering communication process. Therefore, the zero-power device has significant advantages:
(1) The zero-power device does not actively transmit the signal, so there is no need for a complex RF link, such as a Power Amplifier (PA), a RF filter or the like.
(2) There is no need to actively generate a high-frequency signal, so there is no need for a high-frequency crystal oscillator.
(3) With the back-scattering communication, the transmission of the signal of the terminal does not need to consume a power of the terminal itself.

### 3. Coding Technology

The data transmitted by the zero-power device can be represented by different forms of codes for binary "1" and "0". A RFID system typically uses one of the following coding methods: Non-Return to Zero (NRZ) Coding, Manchester Coding, Unipolar Return to Zero Coding, Differential Bi-Phase (DBP) Coding, Differential Coding, Pulse Interval Encoding (PIE), Bi-directional Space coding (FM0), Miller Coding, Differential Manchester Coding or the like. Generally speaking, different coding technologies use different pulse signals to represent "1" and "0.

In some scenarios, zero-power devices can be classified into the following types based on power sources and usage modes of the zero-power devices.

### 1. Passive Zero-Power Device

The Zero-power device (e.g., the electronic tag in the RFID system) does not need a built-in battery. When the zero-power device approaches the network device (e.g., the reader-writer in the RFID system), the zero-power device is located within the near-field range formed by the radiation of the antenna of the network device. Therefore, the antenna of the zero-power device generates the induced current through the electromagnetic induction, and the induced current drives a low-power chip circuit of the zero-power device, thereby realizing the demodulation of a forward link signal and the modulation of a reverse link (or a back-scattering link) signal. For the back-scattering link, the zero-power device transmits the signal using the back-scattering mechanism.

It can be seen that the passive zero-power device does not require the built-in battery to drive the forward link or the reverse link, thereby making it truly a zero-power device.

The passive zero-power device does not need the battery, and its FR circuit and baseband circuit are very simple, for example, they do not require a Low-Noise Amplifier (LNA), a PA, a crystal oscillator, an Analog-To-Digital Converter (ADC) and other components. Therefore, the passive zero-power device has many advantages such as the small size, the light weight, the very cheap price, and the long service life.

### 2. Semi-passive Zero-Power Device

The semi-passive zero-power device itself is not equipped with a conventional battery, but it can use a RF power harvesting module to harvest the power of the radio waves and store the harvested power in a power storage unit (e.g., a capacitor). The power storage unit can drive the low-power chip circuit of the zero-power device after obtaining the power, thereby realizing the demodulation of the forward link signal and the modulation of the reverse link signal. For the back-scattering link, the zero-power device transmits the signal using the back-scattering mechanism.

It can be seen that the semi-passive zero-power device does not require the built-in battery to drive the forward link or the reverse link. Although the power stored in the capacitor is used during the operation, the power comes from the radio power harvested by the power harvesting module, thereby making it truly a zero-power device.

The semi-passive zero-power device inherits many advantages of the passive zero-power device. Therefore, the semi-passive zero-power device has many advantages such as the small size, the light weight, the very cheap price, and the long service life.

### 3. Active Zero-Power Device

The zero-power device used in some scenarios can also be the active zero-power device, and such device can have the built-in battery. The battery is used to drive the low-power chip circuit of the zero-power device, thereby realizing the demodulation of the forward link signal and the modulation of the reverse link signal. However, for the back-scattering link, the zero-power device transmits the signal using the back-scattering mechanism. Therefore, zero-power for such device is mainly reflected in the fact that a signal transmission of the reverse link does not require the power of the terminal itself, but uses the back-scattering mechanism instead.

### II. Cellular Passive IoT

With the increase of 5G industry applications, there are more and more types and application scenarios of connected objects, and there will also be a higher requirement for a cost and a power consumption of a communication terminal. An application of a passive IoT device with battery-free and low-cost has become a key technology in a cellular IoT, enriching the types and quantities of 5G network-linked terminals, and truly realizing the Internet of Everything (IoE). The passive IoT device can be based on the zero-power communication technology (e.g., a RFID technology) and can be extended on this basis to be suitable for the cellular IoT.

In order to facilitate understanding of the embodiments of the disclosure, a power supply signal, a scheduling signal, and a carrier signal related to the zero-power communication are described below.

### 1. Power Supply Signal

The power supply signal is a power source for harvesting power by the zero-power device.

In terms of a carrier of the power supply signal, the carrier of the power supply signal can be a base station, a smartphone, a smart gateway, a charging station, a micro base station or the like.

In terms of a frequency band, the frequency band of the radio wave used for the power supply may be a low frequency, a medium frequency, a high frequency or the like.

In terms of a waveform, the waveform of the radio wave used for the power supply may be a sine wave, a square wave, a triangular wave, a pulse wave, a rectangular wave or the like.

In addition, the power supply signal may be a continuous wave or a discontinuous wave (i.e., interruption is allowed for a certain period of time).

Optionally, the power supply signal may be an existing signal in a 3GPP standard, for example, a Sounding Reference Signal (SRS), Physical Uplink Shared Channel (PUSCH), Physical Random Access Channel (PRACH), Physical Uplink Control Channel (PUCCH), Physical Downlink Control Channel (PDCCH), Physical Downlink Shared Channel (PDSCH), Physical Broadcast Channel (PBCH) or the like, or the power supply signal may be a Wireless Fidelity (WIFI) signal or a Bluetooth signal.

Optionally, the power supply signal may also be implemented through a newly defined signal, for example, the newly defined signal dedicated to the power supply.

### 2. Trigger Signal or Scheduling Signal

The trigger signal is used for triggering or scheduling the zero-power device for data transmission.

In terms of a carrier of the trigger signal, the carrier of the trigger signal can be a base station, a smartphone, a smart gateway or the like.

In terms of a frequency band, the frequency band of the radio wave used for triggering or scheduling may be a low frequency, a medium frequency, a high frequency or the like.

In terms of a waveform, the waveform of the radio wave used for triggering or scheduling may be a sine wave, a square wave, a triangular wave, a pulse wave, a rectangular wave or the like.

In addition, the trigger signal may be a continuous wave or a discontinuous wave (i.e., interruption is allowed for a certain period of time).

Optionally, the trigger signal may be an existing signal in the 3GPP standard, for example, the SRS, the PUSCH, the PRACH, the PUCCH, the PDCCH, the PDSCH, the PBCH or the like, or the trigger signal may be the WIFI signal or the Bluetooth signal.

Optionally, the trigger signal may also be implemented through a newly defined signal, for example, the newly defined signal dedicated to triggering or scheduling.

### 3. Carrier Signal

The carrier signal is used for the zero-power device to generate the back-scattering signal, for example, the zero-power device may modulate the received carrier signal to form the back-scattering signal based on information needed to be transmitted.

In terms of a carrier of the carrier signal, the carrier of the carrier signal can be a base station, a smartphone, a smart gateway or the like.

In terms of a frequency band, the frequency band of the radio wave used for the carrier signal may be a low frequency, a medium frequency, a high frequency or the like.

In terms of a waveform, the waveform of the radio wave used for the carrier signal may be a sine wave, a square wave, a triangular wave, a pulse wave, a rectangular wave or the like.

In addition, the carrier signal may be a continuous wave or a discontinuous wave (i.e., interruption is allowed for a certain period of time).

Optionally, the carrier signal may be an existing signal in the 3GPP standard, for example, the SRS, the PUSCH, the PRACH, the PUCCH, the PDCCH, the PDSCH, the PBCH or the like, or the carrier signal may be the WIFI signal or the Bluetooth signal, or a zigbee signal.

Optionally, the carrier signal may also be implemented through a newly defined signal, for example, the newly defined signal dedicated to generating the back-scattering signal.

In the embodiments of the disclosure, it should be noted that the power supply signal, the scheduling signal and the carrier signal may be the same signal, or may be different signals, for example, the power supply signal may be used as the carrier signal, the scheduling signal may also be used as the carrier signal or the like.

In an actual network deployment, a technical bottleneck faced by the passive zero-power communication technology is a coverage distance of the forward link is limited. The main reason is that the communication distance of the forward link is limited by a signal strength of the wireless signal reaching the zero-power device. Generally, the zero-power device needs to consume 10uw (i.e., microwatts) of the power to drive the low-power circuit based on an existing implementation process, which means that the signal power of the wireless signal reaching the zero-power device needs to be at least -20dBm. Due to a requirement of radio regulation, a transmission power of the network device generally cannot be too high. For example, a maximum transmission power is 30 dBm for an Industrial, Scientific, Medical (ISM) frequency band in which the RFID operates. Therefore, considering a radio propagation loss in space, the transmission distance of the passive zero-power device is generally in the range of 10m to several tens of meters.

The semi-passive zero-power device has a potential to significantly expand the communication distance because the semi-passive zero-power device can use the power harvesting module to harvest the radio waves, thereby continuously obtaining the radio power and storing it in the power storage unit. After obtaining an enough power, the power storage unit can drive the low-power circuit to operate for the demodulation of the forward link signal and the modulation of the reverse link signal. Therefore, at this time, the semi-passive zero-power device is equivalent to an active terminal, and its downlink coverage depends on the receiver sensitivity of the downlink signal (which is usually much lower than a RF power harvesting threshold). Based on the current process, the power harvesting module may perform the power harvesting and input an electrical power to the power storage unit when the received radio signal strength is not less than -30dBm. Therefore, the coverage of the forward link of the semi-passive zero-power device depends on the power harvesting threshold (e.g., -30dBm). Compared to the passive zero-power device, and the received radio signal strength is relaxed from -20dBm to -30dBm, thereby obtaining a 10 dB link budget gain, which can increase the downlink coverage by more than 3 times.

However, while improving the coverage of the forward link, the semi-passive zero-power device also faces the problem of decreasing charging efficiency. As the received signal strength decreases, the power that the power harvesting module can harvest and store is significantly reduced. For example, when the received signal strength is -30dBm (i.e., 1 microwatt), the power that can be harvested and stored is far less than 1 microwatt (the energy/power harvesting efficiency significantly decreases). On the other hand, as previously mentioned, the low-power circuit of the zero-power device may consume an average power of 10uw. Therefore, for the semi-passive zero-power device, a longer time of the power harvesting is needed to support a shorter time of the communication. For example, the sensor device needs to consume a certain amount of power for data reading, data reporting, and receiving data. However, a peer device does not know a power storage state of the zero-power device. Whether the zero-power device is in a power-off state or in a power harvesting state, the zero-power device cannot communicate with another device. Here, it is assumed that the zero-power device cannot perform the power harvesting and the communication simultaneously. Therefore, due to the uncertainty of the state of the zero-power device, another device communicating with it cannot determine the time when they can communicate. If a blind transmission and blind reception mode is adopted, the power and the resource will be wasted. Therefore, how to ensure communication between the zero-power device and another device is an urgent problem to be solved.

In order to facilitate understanding of the technical solutions in the embodiments of the disclosure, the technical solutions in the disclosure will be described in detail below in combination with the specific embodiments, and the above related art may be combined with the technical solutions in the embodiments of the disclosure as an optional solution, all of which belong to the scope of protection of the embodiments of the disclosure. The embodiments of the disclosure include at least some of the following contents.

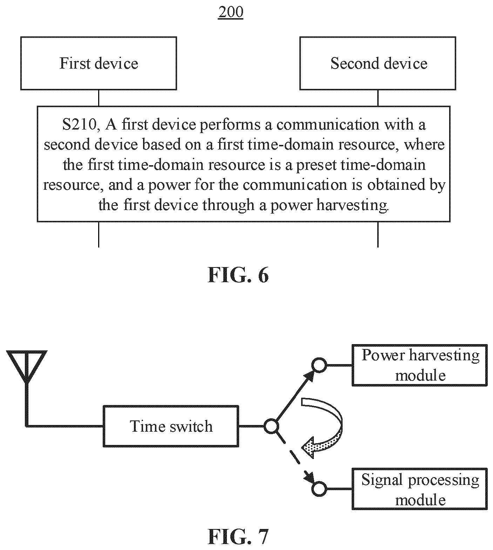

FIG. 6 is a schematic diagram illustrating a method for wireless communication according to an embodiment of the disclosure. As illustrated in FIG. 6, the method 200 includes at least some of the following contents.

At S210, a first device performs a communication with a second device based on a first time-domain resource. The first time-domain resource is a preset time-domain resource, and a power for the communication is obtained by the first device through a power harvesting.

Correspondingly, the second device performs the communication with the first device based on the first time-domain resource.

In some embodiments, the first device may be an ambient power-based device, such as an Ambient Power Enabled IoT (AMP IoT) device, or a communication device in a cellular network (e.g., a device having a power supply demand in the cellular network), or a communication device in a non-cellular network (e.g., a device having a power supply demand in a non-cellular network). The non-cellular network may include, for example, but is not limited to, a WIFI system, a Bluetooth system, a Zigbee system, a Lora system, and the like.

In some embodiments, the second device may be the network device in the communication system, such as the base station in the cellular network, an Access Point (AP) in the WIFI system or the like. Alternatively, the second device may be the active terminal (or a traditional terminal) in the communication system. Alternatively, the first device and the second device are of the same type.

It should be understood that the disclosure does not limit the power source used by the first device to harvest the power. The power source may be, for example, the RF signal, or other environmental powers such as a solar power, a thermal power, a mechanical power, or the like. Optionally, the RF signal may be any radio signal in the environment (e.g., a data signal exchanged between two devices, the scheduling signal, a common signal transmitted by the network device, etc.), or may be a dedicated power supply signal transmitted by a power supply device.

In some embodiments, the power supply device may be the network device in the communication system, such as the base station in the cellular network, the AP in the WIFI system or the like. Alternatively, the power supply device may be the active terminal in the communication system. Alternatively, the power supply device may be an independent power supply device or a dedicated power supply device.

In some embodiments, a device that powers the first device may be the second device, or may be other devices.

That is, a device communicating with the first device and the power supply device of the first device may be the same device, or may be different devices.

In some embodiments, the first device does not simultaneously perform the power harvesting and the communication.

In other words, the first device is not in a power harvesting state and a communication state at the same time, that is, the power harvesting state of the first device and the communication state of the first device are temporally separate.

In some embodiments, the first device may harvest a power from the RF signal, and the power obtained by the receiver of the first device through the RF signal is typically only used for one of a signal processing (e.g., a signal demodulation or a signal modulation) or the power harvesting, so the first device is not capable of performing the power harvesting and the communication simultaneously.

For example, the first device needs to determine whether a currently executable behavior is the signal processing or the power harvesting before receiving the RF signal. If a current stored power of the first device meets a power required for the signal processing, the first device may perform the information processing using the power without performing the power harvesting. Of course, the first device may continue to perform the power harvesting.

In some embodiments, the first device includes a signal processing module and a power harvesting module. The signal processing module is used for modulating or demodulating for a purpose of a signal transmission or a signal reception, and the power harvesting module is used for performing the power harvesting.

Optionally, when the first device is in the power harvesting state, the power harvesting module of the first device may be considered to be in an active state or an operating state. When the first device is in the communication state, the signal processing module of the first device may be considered to be in the active state or the operating state.

In some embodiments, the first device may perform a state switching based on a time switch. In other words, the first device may perform the switching between the signal processing module and the power harvesting module. Optionally, the time switch may be implemented by a timer, for example, the first device is in a communication state during a running of the timer, and after the timer has expired, the first device is in the power harvesting state. As illustrated in FIG. 7, on the first time-domain resource, it is switched to the signal processing module for communication; that is, it is switched to the communication state; when outside of the first time-domain resource, it is switched to the power harvesting module for power harvesting.

In some embodiments, the first time-domain resource is a preset time-domain resource. In other words, the first time-domain resource is a preset time-domain resource for the communication. That is, both a device at a transmission end and a device at a reception end for the communication can learn the first time-domain resource, and both of them have a same understanding of the time-domain resource used for the communication. Therefore, in the embodiment of the disclosure, since the first device and the second device have an explicit time-domain resource when communicating, it is not necessary to perform the communication through the blind transmission and blind reception mode, which can reduce wastage of a power and a resource caused by using the blind transmission and blind reception mode.

In some embodiments, the first time-domain resource may be understood as a basic time-domain resource for guaranteeing basic requirements for the communication between the first device and the peer device. In an implementation, the second device is the network device, and the network device may initiate a communication with the zero-power device on the first time-domain resource, for example, the network device may trigger a subsequent communication with the first device through a paging. The first device may also initiate a communication with the network device on the first time-domain resource, for example, the first device triggers a subsequent communication with the network device through a random access.

In some embodiments, the first time-domain resource is a periodic time-domain resource.

In some embodiments, the first time-domain resource is predefined, or is configured by a network device, or is negotiated between the first device and the second device.

In some embodiments, a period of the first time-domain resource is predefined, or is configured by the network device, or is negotiated between the first device and the second device.

In some embodiments, a time offset of the first time-domain resource within a period is predefined, or is configured by the network device, or is negotiated between the first device and the second device.

In some embodiments, a duration of the first time-domain resource within a period is predefined, or is configured by the network device, or is negotiated between the first device and the second device.

That is, a pattern of the first time-domain resource may be predefined, or is configured by the network device, or is negotiated between the first device and the second device.

In some embodiments, the first time-domain resource is determined when establishing a connection between the first device and the second device.

For example, the second device is the network device, and the first time-domain resource may be determined when establishing a connection between the first device and the network device.

In an implementation, the second device is a network device in a WIFI system, and the first device and the network device may negotiate a configuration of the first time-domain resource through an authentication process or an association/re-association process.

In some embodiments, the first time-domain resource includes: a resource for the first device to transmit a signal; and/or, a resource for the first device to receive a signal.

For example, on the first time-domain resource, the resource for the first device to transmit the signal and the resource for the first device to receive the signal are time-division multiplexed.

For another example, the first time-domain resource may be used for both the signal transmission and the signal reception by the first device.

In some embodiments, the first time-domain resource may be separately configured for different first devices.

In some embodiments, the first time-domain resource may be determined based on at least one of: a power harvesting capability of the first device, a power storage capability of the first device, or intensity information of a power harvesting source of the first device (i.e., an environment in which the first device is located).

Optionally, the power harvesting capability of the first device may include, but is not limited to, a power harvesting mode or a power source of the first device.

For example, the first device performs the power harvesting using only the RF signal, i.e., the power source of the first device is the RF signal.

For another example, the first device performs the power harvesting using the RF signal, the solar power, the thermal power, the mechanical power or the like. That is, the power source of the first device is the RF signal, the solar power, the thermal power, the mechanical power or the like.

Optionally, the RF signal may be a RF signal in the environment, or may be a dedicated power supply signal, or may be a data signal transmitted by another device to the first device.

The more power harvesting sources the first device has, the stronger the power harvesting capability (or power harvesting efficiency) of the first device, and the longer a communication duration supported by performing the power harvesting for the same time. Therefore, the duration of the first time-domain resource corresponding to the first device can also be set to be longer.

In some embodiments, the power storage capability of the first device may include, but is not limited to, a power storage capacity of the first device.

The larger the power storage capacity of the first device, the longer the communication duration supported by the first device after the power storage is completed. Therefore, the duration of the first time-domain resource corresponding to the first device can also be set to be longer.

The higher the intensity of the power harvesting source of the first device, the stronger the power harvesting capability (or power harvesting efficiency) of the first device, and the longer the communication duration supported by performing the power harvesting for the same time. Therefore, the duration of the first time-domain resource corresponding to the first device can also be set to be longer.

In some embodiments, the second device determines a state of the first device based on the first time-domain resource.

For example, the second device considers (or assumes) that the first device is in a communication state on the first time-domain resource, or the second device may consider (or assume) that the first device can transmit and/or receive a signal on the first time-domain resource. Therefore, the second device may attempt to receive and/or transmit a signal on the first time-domain resource, thereby reducing the wastage of the power and the resource caused by the blind transmission and blind reception mode.

For example, when there is a need for data transmission, the first device may transmit information on the first time-domain resource, and correspondingly, the second device may receive a signal on the first time-domain resource.

For another example, when there is a need for data transmission, the second device may transmit information on the first time-domain resource, and correspondingly, the first device may receive a signal on the first time-domain resource.

That is, in the embodiments of the disclosure, the second device may consider (or assume) that the first device is in the communication state on the first time-domain resource, so that the second device can communicate with the first device.

It should be understood that in the embodiments of the disclosure, the first time-domain resource is a time-domain resource for communication, but it does not mean that the first device and the second device necessarily communicate on the first time-domain resource (that is, the first device is not necessarily in the communication state on the first time-domain resource). A setting of the first time-domain resource is to ensure that the first device and the second device have the explicit time-domain resource when they need to communicate, rather than using the blind transmission and blind reception mode for communication.

For example, the first device may communicate with the second device on the first time-domain resource when a power storage of the first device supports the first device to perform the communication.

For another example, the first device may continue to perform the power harvesting on the first time-domain resource when the power storage of the first device does not support the first device to perform the communication, and then communicate with the second device when the power storage of the first device supports the first device to perform the communication.

Optionally, if the first device needs to perform a signal transmission, the power storage of the first device supporting the first device to perform the communication may mean that the power storage of the first device meets a power required for the first device to perform operations such as the information processing (e.g., the signal modulation) and the signal transmission.

Optionally, if the first device needs to perform a signal reception, the power storage of the first device supporting the first device to perform the communication may mean that the power storage of the first device meets a power required for the first device to perform operations such as the signal reception and the information processing (e.g., the signal demodulation).

In some embodiments, if the second device fails to communicate with the first device at a first time interval location on the first time-domain resource (e.g., if the second device does not receive feedback information of the signal reception from the first device), the second device may attempt to communicate with the first device again at a second time interval location on the first time-domain. The first time interval location is a location offset by a first time interval from a start location of the first time-domain resource. The second time interval location is a location offset by a second time interval from the start location of the first time-domain resource. The first device may perform power harvesting during a time period between the first time interval location and the second time interval location.

In some embodiments, on the first time-domain resource, if the power storage of the first device supports the first device to perform the communication, the first device may transmit a first signal to the second device, and/or the first device may receive a second signal transmitted by the second device.

In some embodiments, the first signal may include target data that the first device wants to transmit to the second device.

In some embodiments, the second signal may include target data that the second device wants to transmit to the first device.

In some embodiments, the second device is the network device, and the second signal may be a common signal transmitted by the network device, such as a synchronization signal, a signal for timing acquisition or the like.

In some embodiments, the first signal is used to request or negotiate an additional time-domain resource.

In some embodiments, the second signal is used to request or negotiate the additional time-domain resource.

In some embodiments, the first signal includes first indication information, where the first indication information indicates that the first device requests or negotiates a second time-domain resource, and the second time-domain resource is used for the first device to perform the communication.

For example, when the first device has an additional communication requirement, the first device may transmit the first indication information on the first time-domain resource for requesting or negotiating the additional time-domain resource.

In some embodiments, the second signal includes second indication information, where the second indication information indicates that the second device requests or negotiates a second time-domain resource, and the second time-domain resource is used for the second device to perform the communication.

For example, when the second device has an additional communication requirement, the second device may transmit the second indication information on the first time-domain resource for requesting or negotiating the additional time-domain resource.

In some embodiments of the disclosure, the first indication information indicates at least one of: period information of the communication, duration information of the communication, a target data transmission volume, a power harvesting capability of the first device, a power storage capability of the first device, a duration required for the first device to recover a power (i.e., a power recovery time), or spatial information for the communication.

Optionally, the period information of the communication and the duration information of the communication represent that the first device expects to obtain the additional second time-domain resource. The period information of the communication may be a period of the second time-domain resource, and the duration information of the communication may be a duration of the second time-domain resource within one period.

Optionally, the target data transmission volume may be a data volume that the first device needs to transmit.

Optionally, the specific implementations of the power harvesting capability and the power storage capability of the first device refers to the related description of the above embodiments, which will not be repeatedly described here.

Optionally, the duration required for the first device to recover the power may refer to a duration during which the first device needs to perform the power harvesting and recover power storage after performing one communication. The recovered power storage is used to support the first device to perform a next communication.

In some embodiments, the spatial information for the communication may refer to spatial information that the first device desires to use for the signal transmission with the second device. The signal transmission between the first device and the second device based on the spatial information is beneficial for improving a coverage level of a communication link.

Optionally, the spatial information may include, but is not limited to, direction information, beam information, a spatial domain transmission filter, and reference signal information.

Optionally, the spatial information may be identified using a synchronization signal or a reference signal, for example, the spatial information may be identification information of the synchronization signal or the reference signal.

In some embodiments, a transmitting antenna of the first device may be designed to have a strong gain in one or more directions, such that the first device may enable a transmitting power of a signal to be concentrated in the one or more directions when transmitting the signal. Optionally, the transmitting antenna of the first device may be implemented by an antenna array.

In some embodiments, a transmitting antenna of the second device may be designed to have a strong gain in one or more directions, such that the second device may enable a transmitting power of a signal to be concentrated in the one or more directions when transmitting the signal. Optionally, the transmitting antenna of the second device may be implemented by an antenna array.

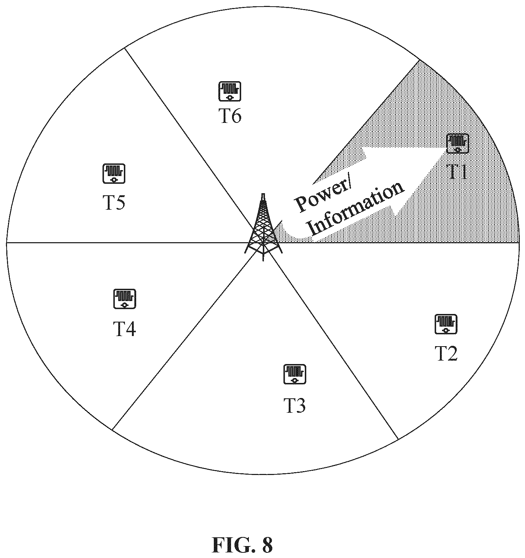

In some embodiments, the first device may determine spatial information corresponding to a stronger signal by receiving the signal from the second device, and then may indicate the spatial information to the second device when transmitting the first signal. For example, as illustrated in FIG. 8, the first device is the zero-power device, the second device is the network device, the second device is further used to power the first device, and the network device may transmit the signal based on certain spatial information. The first device can determine spatial information corresponding to a stronger signal by receiving signals from the network device, and may indicate the spatial information to the network device when transmitting the first indication information. In this way, when communicating with the first device, the network device can perform the communication with the first device based on the spatial information, which is beneficial for ensuring a communication quality.

In some embodiments of the disclosure, the second indication information indicates at least one of: period information of the communication, duration information of the communication, a target data transmission volume, or spatial information for the communication.

A specific implementation of each piece of information in the second indication information refers to corresponding information in the first indication information, which will not be repeatedly described here for the sake of brevity.

In some embodiments, the second time-domain resource is a non-preset time-domain resource, an additional time-domain resource, or a passively set time-domain resource (e.g., a time-domain resource set based on a request or a trigger), or an on-demand set time-domain resource. The second time-domain resource can be used to ensure an instantaneous transmission requirement or an urgent transmission requirement of the first device or the second device.

In some embodiments of the disclosure, the method 200 further includes the following operations.

The first device determines a second time-domain resource; and the second device determines a second time-domain resource.

Further, the first device may perform the communication with the second device on the second time-domain resource.

In some embodiments, the first device does not communicate with the second device on a time-domain resource that is outside of the first time-domain resource and does not belong to the second time-domain resource.

In some embodiments, the second time-domain resource is a periodic time-domain resource; or the second time-domain resource is an aperiodic time-domain resource.

In some embodiments, the second time-domain resource may be determined based on the first indication information and/or the second indication information.

For example, the duration of the second time-domain resource may be determined based on at least one of: a period for the communication, a duration for the communication, or a power recovery time. As an example, the duration of the second time-domain resource is greater than or equal to the duration of the communication. As another example, it is determined that some or all of the other times other than the power recovery time in one period belong to the second time-domain resource.

In some embodiments, the second time-domain resource is configured by the second device for the first device.

For example, the second device is the network device, and the second time-domain resource may be configured by the network device for the first device.

Optionally, the second time-domain resource may be determined by the network device based on the first indication information and/or the second indication information.

For example, the network device may determine the duration of the second time-domain resource based on at least one of the period for communication, the duration for communication, or the power recovery time. As an example, it is determined that the duration of the second time-domain resource is longer than or equal to the duration of the communication. As another example, it is determined that some or all of the other times other than the power recovery time in one period belong to the second time-domain resource.

In some embodiments, the second time-domain resource may be determined by the first device. For example, the second time-domain resource is determined by the first device based on the first indication information and/or the second indication information.

In some embodiments, the second time-domain resource is determined based on a first timer and a second timer. The first device is able to perform the communication (e.g., communicate when there is a transmission requirement, and may not communicate when there is no transmission requirement) during running of the first timer. The first device does not perform the communication during running of the second timer. The time-domain resource during the running of the first timer belongs to the second time-domain resource.

In some embodiments, durations of the first timer and the second timer are determined based on the first indication information or the second indication information. For example, the durations of the first timer and the second timer are determined based on the duration of the communication, and the power recovery time. As an example, the duration of the first timer is greater than or equal to the duration of the communication, and the duration of the second timer is greater than or equal to the power recovery time.

Optionally, the second timer is started after the first device performs one communication, the first timer is started when the second timer expires, and the first timer and the second timer are not started at the same time.

In some embodiments, the second time-domain resource may be considered as a time-domain resource determined by the first device and the second device through a request, an interaction, a negotiation, or other similar methods to ensure that the first device remains in a communication state.

Optionally, when the first device and the second device communicate based on the second time-domain resource, the first time-domain resource is invalid (or is in a deactivated state or a disabled state), that is, the first device and the second device no longer communicate based on the first time-domain resource.

Optionally, when the first device and the second device communicate based on the second time-domain resource, the first time-domain resource is still valid (or is in an active state or an enabled state), that is, the first device and the second device can still communicate on the first time-domain resource.

In some embodiments, the method 200 further includes the following operations.

The first device falls back from a communication based on the second time-domain resource to a communication based on the first time-domain resource.

For example, the first device may determine to fall back to the communication based on the first time-domain resource in an explicit or implicit manner.

That is, the first device may switch the first time-domain resource from the deactivated state to the activated state in an explicit or implicit manner.

Correspondingly, the first device may switch the second time-domain resource from the activated state to the deactivated state in an explicit or implicit manner.

Optionally, the explicit manner may include, but is not limited to, falling back, based on explicit indication information, to the communication based on the first time-domain resource.

Optionally, the explicit indication information indicates an end of the communication or an end of the data transmission.

Optionally, the explicit indication information may directly indicate a fallback to the communication based on the first time-domain resource, that is, the indication information is fallback indication information.

Optionally, the implicit manner may include, but is not limited to, the first device, based on the timer, falling back to the communication based on the first time-domain resource.

For example, when the timer expires, the first device falls back to the communication based on the first time-domain resource. The timer is started when the first device performs the communication with the second device based on the second time-domain resource.

Optionally, implicit indication information may include feedback information replied by a reception end device. For example, acknowledgement (ACK) information replied by the reception end device.

In some embodiments, when a first condition is met, the first device falls back from the communication based on the second time-domain resource to the communication based on the first time-domain resource. As an example, the first condition includes, but is not limited to, at least one of: the first device has received third indication information transmitted by the second device, herein the third indication information indicates an end of the communication or indicates a fallback to the communication based on the first time-domain resource; the first device transmits fourth indication information to the second device, herein the fourth indication information indicates the end of the communication or indicates the fallback to the communication based on the first time-domain resource; a third timer has expired, herein the first device performs the communication based on the second time-domain resource during running of the third timer; the first device has received feedback information regarding a signal reception (e.g., ACK) from the second device; or the first device transmits feedback information regarding a signal reception (e.g., ACK) to the second device.

Correspondingly, in some embodiments, the method 200 further includes the following operations.

The second device falls back from the communication based on the second time-domain resource to the communication based on the first time-domain resource.

In other words, the second device can fall back from a determination of the state (i.e., the power harvesting state or the communication state) of the first device based on the second time-domain resource to a determination of the state (i.e., the power harvesting state or the communication state) of the first device based on the first time-domain resource.

For example, the second device may determine to fall back to the communication with the first device based on the first time-domain resource in an explicit or implicit manner.

That is, the second device may switch the first time-domain resource from a deactivated state to an activated state in an explicit or implicit manner.

Correspondingly, the second device may switch the second time-domain resource from an activated state to a deactivated state in an explicit or implicit manner.

In some embodiments, when a second condition is met, the second device falls back from the communication with the first device based on the second time-domain resource to the communication with the first device based on the first time-domain resource.

As an example, the second condition includes, but is not limited to, at least one of: the second device transmits third indication information to the first device, herein the third indication information indicates an end of the communication or indicates a fallback to the communication based on the first time-domain resource; the second device has received fourth indication information from the first device, herein the fourth indication information indicates the end of the communication or indicates the fallback to the communication based on the first time-domain resource; a third timer has expired, herein the second device performs the communication with the first device based on the second time-domain resource during running of the third timer; the second device has received feedback information regarding a signal reception (e.g., ACK) from the first device; or the second device transmits feedback information regarding a signal reception (e.g., ACK) to the first device.

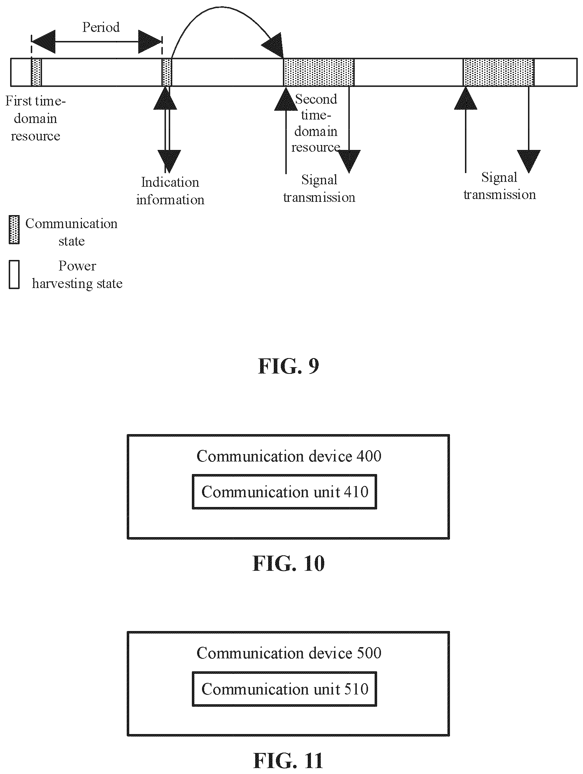

Referring to a specific example in FIG. 9, a manner in which the first device communicates with the second device according to an embodiment of the disclosure will be described below.

As illustrated in FIG. 9, the first device performs a communication with the second device based on the first time-domain resource. The first device is in the communication state on the first time-domain resource, and the first device is in a power harvesting state outside the first time-domain resource.

The first device and the second device may determine the second time-domain resource after indication information (e.g., the first indication information and/or the second indication information) for requesting or negotiating the second time-domain resource is exchanged between the first device and the second device on the first time-domain resource within a certain period. Further, the signal transmission is performed based on the second time-domain resource. In some embodiments, that is outside of the first time-domain resource and does not belong to.

To sum up, in the embodiments of the disclosure, the first device can perform the communication with the second device based on the preset first time-domain resource. That is, when the first device and the second device need to communicate with each other, there is an explicit time-domain resource available, rather than using a blind transmission and blind reception mode for communication, which is beneficial for reducing wastage of a power and a resource caused by using the blind transmission and blind reception mode.

Further, the additional second time-domain resource can be determined based on the request of the first device or the second device, so as to meet the instantaneous transmission requirement or the urgent transmission requirement of the first device or the second device.

The method embodiments of the disclosure are described above in detail with reference to FIG. 6 to FIG. 9, and the device embodiments of the disclosure are described below in detail with reference to FIG. 10 to FIG. 14. It should be understood that the device embodiments correspond to the method embodiments, and similar descriptions can refer to the method embodiments.

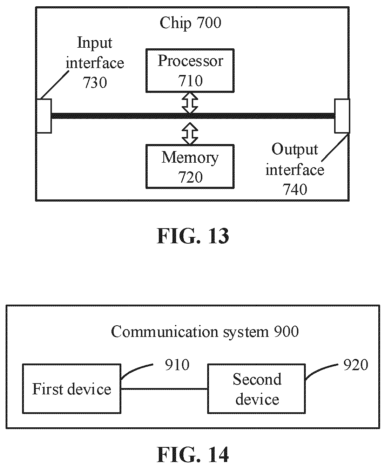

FIG. 10 is a schematic block diagram of a communication device according to an embodiment of the disclosure. The communication device does not simultaneously perform a power harvesting and a communication, as illustrated in FIG. 14, the communication device 400 includes a communication unit 410.

The communication unit 410 is configured to perform the communication with a second device based on a first time-domain resource. The first time-domain resource is a preset time-domain resource, and a power for the communication is obtained by the communication device through the power harvesting.

In some embodiments, the first time-domain resource is a periodic time-domain resource.

In some embodiments, the first time-domain resource is predefined, or is configured by a network device, or is negotiated between the communication device and the second device.

In some embodiments, a period of the first time-domain resource is predefined, or is configured by the network device, or is negotiated between the communication device and the second device.

A time offset of the first time-domain resource within a period is predefined, or is configured by the network device, or is negotiated between the communication device and the second device.

A duration of the first time-domain resource within a period is predefined, or is configured by the network device, or is negotiated between the communication device and the second device.

In some embodiments, the first time-domain resource is determined when establishing a connection between the communication device and the second device.

In some embodiments, the first time-domain resource is determined based on at least one of: a power harvesting capability of the communication device, a power storage capability of the communication device, or intensity information of a power harvesting source of the communication device.

In some embodiments, the first time-domain resource includes a resource for the communication device to transmit a signal and/or a resource for the communication device to receive a signal.

In some embodiments, the communication unit 410 is further configured to perform the communication with the second device on the first time-domain resource when a power storage of the communication device supports the communication device to perform the communication.

In some embodiments, the communication unit 410 is further configured to: transmit a first signal to the second device on the first time-domain resource; and/or receive a second signal from the second device on the first time-domain resource.

In some embodiments, the first signal includes first indication information, where the first indication information indicates that the communication device requests a second time-domain resource, and the second time-domain resource is used for the communication device to perform the communication.

The second signal includes second indication information, where the second indication information indicates that the second device requests the second time-domain resource, and the second time-domain resource is used for the second device to perform the communication.

In some embodiments, the first indication information indicates at least one of: period information of the communication, duration information of the communication, a target data transmission volume, a power harvesting capability of the communication device, a power storage capability of the communication device, a duration required for the communication device to recover a power, or spatial information for the communication.

In some embodiments, the second indication information indicates at least one of: period information of the communication, duration information of the communication, a target data transmission volume, or spatial information for the communication.

In some embodiments, the communication device 400 further includes a processing unit.

The processing unit is configured to determine the second time-domain resource. The second time-domain resource is used for the communication device to perform the communication.

In some embodiments, the second time-domain resource is configured by the second device for the communication device.

In some embodiments, the second time-domain resource is determined by the communication device based on the first indication information or the second indication information.

In some embodiments, the second time-domain resource the second time-domain resource is determined based on a first timer and a second timer. The communication device is able to perform the communication during running of the first timer, the communication device does not perform the communication during running of the second timer, and durations of the first timer and the second timer are determined based on the first indication information or the second indication information.

In some embodiments, the second time-domain resource is a periodic time-domain resource; or the second time-domain resource is an aperiodic time-domain resource.

In some embodiments, the communication unit 410 is further configured to perform no communication with the second device on a time-domain resource that is outside of the first time-domain resource and does not belong to the second time-domain resource.

In some embodiments, the communication unit 410 is further configured to fall back from a communication based on the second time-domain resource to the communication based on the first time-domain resource when a first condition is met.

In some embodiments, the first condition includes at least one of: the communication device has received third indication information from the second device, herein the third indication information indicates an end of the communication or indicates a fallback to the communication based on the first time-domain resource; the communication device transmits fourth indication information to the second device, herein the fourth indication information indicates the end of the communication or indicates the fallback to the communication based on the first time-domain resource; a third timer has expired, herein the communication device performs the communication based on the second time-domain resource during running of the third timer; the communication device has received feedback information regarding a signal reception from the second device; or the communication device transmits feedback information regarding a signal reception to the second device.

Optionally, in some embodiments, the above communication unit may be a communication interface or a transceiver, or an input/output interface of a communication chip or a system-on-chip. The above processing unit may be one or more processors.

It should be understood that the communication device 400 according to the embodiments of the disclosure may correspond to the first device in the method embodiments of the disclosure. The various units in the communication device 400 perform the above and other operations and/or functions to implement the corresponding processes of the first device illustrated in FIG. 6 to FIG. 9. For simplicity, elaborations are omitted herein.

FIG. 11 is a schematic block diagram of a communication device 500 according to an embodiment of the disclosure. As illustrated in FIG. 11, the communication device 500 includes a communication unit 510.

The communication unit 510 is configured to perform a communication with a first device on a first time-domain resource. The first time-domain resource is a preset time-domain resource, a power for the communication is obtained by the first device through a power harvesting, and the power harvesting and the communication are not simultaneously performed by the first device.

In some embodiments, the first time-domain resource is a periodic time-domain resource.

In some embodiments, the first time-domain resource is predefined, or is configured by a network device, or is negotiated between the first device and the second device.

In some embodiments, a period of the first time-domain resource is predefined, or is configured by the network device, or is negotiated between the first device and the second device.

A time offset of the first time-domain resource within the period is predefined, or is configured by the network device, or is negotiated between the first device and the second device.

A duration of the first time-domain resource within the period is predefined, or is configured by the network device, or is negotiated between the first device and the second device.

In some embodiments, the first time-domain resource is determined when establishing a connection between the first device and the second device.

In some embodiments, the first time-domain resource is determined based on at least one of: a power harvesting capability of the first device, a power storage capability of the first device, or intensity information of a power harvesting source of the first device.

In some embodiments, the first time-domain resource includes a resource a resource for the first device to transmit a signal and/or a resource for the first device to receive a signal.

In some embodiments, the communication unit 510 is further configured to receive a first signal from the first device on the first time-domain resource; and/or transmit a second signal to the first device on the first time-domain resource.

In some embodiments, the first signal includes first indication information, where the first indication information indicates that the first device requests a second time-domain resource, and the second time-domain resource is used for the first device to perform the communication.

The second signal includes second indication information, where the second indication information indicates that the second device requests a second time-domain resource, and the second time-domain resource is used for the second device to perform the communication.

In some embodiments, the first indication information indicates at least one of: period information of the communication, duration information of the communication, a target data transmission volume, a power harvesting capability of the first device, a power storage capability of the first device, a duration required for the first device to recover a power, or spatial information for the communication.

In some embodiments, the second indication information indicates at least one of: period information of the communication, duration information of the communication, a target data transmission volume, or spatial information for the communication.

In some embodiments, the communication unit 500 further includes a processing unit.

The processing unit configured to determine the second time-domain resource. The second time-domain resource is used for the second device to perform the communication.

In some embodiments, the second time-domain resource is determined by the second device based on the first indication information or the second indication information.

In some embodiments, the second time-domain resource is determined based on a first timer and a second timer. The first device is able to perform the communication during running of the first timer, the first device does not perform the communication during running of the second timer, and durations of the first timer and the second timer are determined based on the first indication information or the second indication information.

In some embodiments, the communication unit 510 is further configured to transmit first configuration information to the first device. The first configuration information is used for configuring the second time-domain resource.

In some embodiments, the second time-domain resource is a periodic time-domain resource; or the second time-domain resource is an aperiodic time-domain resource.

In some embodiments, the communication unit 510 is further configured to: perform no communication with the first device on a time-domain resource that is outside of the first time-domain resource and does not belong to the second time-domain resource.

In some embodiments, the communication unit 510 is further configured to fall back from a communication with the first device based on the second time-domain resource to the communication with the first device based on the first time-domain resource when a second condition is met.

In some embodiments, the second condition includes at least one of: the second device transmits third indication information to the first device, herein the third indication information indicates an end of the communication or indicates a fallback to the communication based on the first time-domain resource; the second device has received fourth indication information from the first device, herein the fourth indication information indicates the end of the communication or indicates the fallback to the communication based on the first time-domain resource; a third timer has expired, herein the second device performs the communication with the first device based on the second time-domain resource during running of the third timer; the second device has received feedback information regarding a signal reception from the first device; or the second device transmits feedback information regarding a signal reception to the first device.

Optionally, in some embodiments, the above communication unit may be a communication interface or a transceiver, or an input/output interface of a communication chip or a system-on-chip. The above processing unit may be one or more processors.

It should be understood that the communication device 500 according to the embodiments of the disclosure may correspond to the second device in the method embodiments of the disclosure. The various units in the communication device 500 perform the above and other operations and/or functions to implement the corresponding processes of the second device illustrated in FIG. 6 to FIG. 9. For simplicity, elaborations are omitted herein.

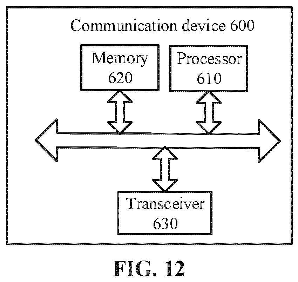

FIG. 12 is a schematic structure diagram of a communication device 600 according to an embodiment of the disclosure. The communication device 600 illustrated in FIG. 12 includes a processor 610. The processor 610 is configured to call a computer program from a memory and run the computer program to perform the method in the embodiments of the disclosure.

Optionally, as illustrated in FIG. 12, the communication device 600 may further include a memory 620. The processor 610 may be configured to call the computer program from the memory 620 and run the computer program to perform the method in the embodiments of the disclosure.

The memory 620 may be a separate device independent of the processor 610 or may be integrated into the processor 610.

Optionally, as illustrated in FIG. 12, the communication device 600 may further include a transceiver 630, and the processor 610 may be configured to control the transceiver 630 to communicate with other devices, in particular to may transmit information or data to other devices, or receive information or data from other devices.

The transceiver 630 may include a transmitter and a receiver. The transceiver 630 may further include an antenna. The number of the antennas may be one or more.

Optionally, the communication device 600 may specifically be the first device in the embodiments of the disclosure, and the communication device 600 may implement corresponding processes implemented by the first device in each method in the embodiments of the disclosure. For simplicity, elaborations are omitted herein.

Optionally, the communication device 600 may specifically be the second device in the embodiments of the disclosure, and the communication device 600 may implement corresponding processes implemented by the second device in each method in the embodiments of the disclosure. For simplicity, elaborations are omitted herein.

FIG. 13 is a schematic structure diagram of a chip according to an embodiment of the disclosure. The chip 700 illustrated in FIG. 13 includes a processor 710. The processor 710 is configured to call a computer program from a memory and run the computer program to perform the method in the embodiments of the disclosure.

Optionally, as illustrated in FIG. 13, the chip 700 may further include a memory 720. The processor 710 may be configured to call the computer program from the memory 720 and run the computer program to perform the method in the embodiments of the disclosure.

The memory 720 may be a separate device independent of the processor 710, or may also be integrated into the processor 710.

Optionally, the chip 700 may further include an input interface 730. The processor 710 may be configured to control the input interface 730 to communicate with another device or chip. Specifically, the input interface may be controlled to acquire information or data sent by another device or chip.

Optionally, the chip 700 may further include an output interface 740. The processor 710 may be configured to control the output interface 740 to communicate with another device or chip. Specifically, the output interface may be controlled to output information or data to another device or chip.

Optionally, the chip may be applied to the first device in the embodiments of the disclosure, and the chip may be configured to implement the corresponding processes implemented by the first device in each method in the embodiments of the disclosure. For simplicity, elaborations are omitted herein.

Optionally, the chip may be applied to the second device in the embodiments of the disclosure, and the chip may be configured to implement the corresponding processes implemented by the second device in each method in the embodiments of the disclosure. For simplicity, elaborations are omitted herein.

It should be understood that the chip mentioned in the embodiments of the disclosure may also be called a system-level chip, a system chip, a chip system or a system on chip, etc.

FIG. 14 is a schematic block diagram of a communication system 900 according to an embodiment of the disclosure. As illustrated in FIG. 14, the communication system 900 includes a first device 910 and a second device 920.

The first device 910 may be configured to implement the corresponding functions implemented by the first device in the above methods, and the second device 920 may be configured to implement the corresponding functions implemented by the second device in the above methods. For simplicity, elaborations are omitted herein.

It should be understood that the processor in the embodiments of the disclosure may be an integrated circuit chip and has a signal processing capability. In an implementation process, each operation in the method embodiments may be completed by an integrated logical circuit in a hardware form in the processor or instructions in a software form. The above processor may be a general purpose processor, a Digital Signal Processor (DSP), an Application Specific Integrated Circuit (ASIC), a Field Programmable Gate Array (FPGA), or other programmable logic devices, a discrete gate or transistor logical device, or a discrete hardware component, for implementing or executing each method, step and logical block diagram disclosed in the embodiments of the disclosure. The general purpose processor may be a microprocessor or the processor may also be any conventional processor and the like. The steps in the methods disclosed in combination with the embodiments of the disclosure may be directly embodied to be executed and completed by a hardware decoding processor or executed and completed by a combination of hardware in the decoding processor and software modules. The software module may be located in a mature storage medium in this field such as a Random Access Memory (RAM), a flash memory, a Read-Only Memory (ROM), a Programmable ROM (PROM), an Electrically Erasable PROM (EEPROM) and a register. The storage medium is located in a memory, and the processor reads information in the memory, and completes the steps in the above methods in combination with the hardware of the processor.

It should be understood that the memory in the embodiments of the disclosure may be a volatile memory or a non-volatile memory, or may include both the volatile and the non-volatile memories. The non-volatile memory may be a ROM, a PROM, an Erasable PROM (EPROM), an EEPROM or a flash memory. The volatile memory may be a RAM, and is used as an external cache. By way of illustrative but not limiting description, RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM). It should be noted that the memory for the system and method described in the disclosure is intended to include, but not limited to, these and any other suitable types of memories.

It should be understood that the above description of the memory is exemplary and non-limiting. For example, the memory in the embodiments of the disclosure may also be an SRAM, a DRAM, an SDRAM, a DDR SDRAM, an ESDRAM, an SLDRAM, a DR RAM and the like. That is, the memory in the embodiments of the disclosure is intended to include, but not limited to, these and any other suitable types of memories.

An embodiment of the disclosure further provides a computer-readable storage medium for storing a computer program.

Optionally, the computer-readable storage medium may be applied to the first device in the embodiments of the disclosure, and the computer program causes a computer to execute the corresponding processes implemented by the first device in each method in the embodiments of the disclosure. For simplicity, elaborations are omitted herein.

Optionally, the computer-readable storage medium may be applied to the second device in the embodiments of the disclosure, and the computer program causes a computer to execute the corresponding processes implemented by the second device in each method in the embodiments of the disclosure. For simplicity, elaborations are omitted herein.

An embodiment of the disclosure further provides a computer program product including computer program instructions.

Optionally, the computer program product may be applied to the first device in the embodiments of the disclosure, and the computer program instructions cause a computer to execute the corresponding processes implemented by the first device in each method in the embodiments of the disclosure. For simplicity, elaborations are omitted herein.

Optionally, the computer program product may be applied to the second device in the embodiments of the disclosure, and the computer program instructions cause a computer to execute the corresponding processes implemented by the second device in each method in the embodiment of the disclosure. For simplicity, elaborations are omitted herein.

An embodiment of the disclosure further provides a computer program.

Optionally, the computer program may be applied to the first device in the embodiments of the disclosure. When the computer program is run on a computer, the computer program causes the computer to execute the corresponding processes implemented by the first device in each method in the embodiments of the disclosure. For simplicity, elaborations are omitted herein.

Optionally, the computer program may be applied to the second device in the embodiments of the disclosure. When the computer program is run on a computer, the computer program causes the computer to execute the corresponding process implemented by the second device in each method in the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may implement the described functions for each specific application by use of different methods, but such implementation shall fall within the scope of the disclosure.

Those skilled in the art may clearly learn about that specific working processes of the system, device and unit described above may refer to the corresponding processes in the method embodiments and will not be elaborated herein for convenient and brief description.

In some embodiments provided by the disclosure, it is to be understood that the disclosed system, device and method may be implemented in another manner. For example, the device embodiment described above is only schematic, and for example, division of the units is only a logic function division, and other division manners may be adopted during practical implementation. For example, multiple units or components may be combined or integrated into another system, or some characteristics may be neglected or not executed. In addition, coupling or direct coupling or communication connection between displayed or discussed components may be indirect coupling or communication connection through some interfaces, devices or units, and may be electrical, mechanical or in other forms.

The units described as separate parts may or may not be physically separated, and parts displayed as units may or may not be physical units, and namely may be located in the same place, or may also be distributed onto multiple network units. Part or all of the units may be selected to achieve the purpose of the solutions in the embodiments according to a practical requirement.

In addition, functional units in each embodiment of the disclosure may be integrated into a processing unit, each unit may also exist physically and independently, or two or more than two units may also be integrated into a unit.

When being realized in form of software functional unit and sold or used as an independent product, the function may also be stored in a computer-readable storage medium. Based on such an understanding, the technical solutions of the disclosure substantially or parts making contributions to the conventional art or part of the technical solutions may be embodied in form of software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and the scope of protection of the disclosure is not limited thereto. Any variation or replacement easily conceivable by those skilled in the art within the technical scope disclosed by the disclosure shall fall within the scope of protection of the disclosure. Therefore, the scope of protection of the disclosure shall be subject to the scope of protection of the claims.

## Claims

1. A method for wireless communication, applied to a first device, wherein the first device does not simultaneously perform a power harvesting and a communication, and the method comprises:
performing, by the first device, the communication with a second device based on a first time-domain resource, wherein the first time-domain resource is a preset time-domain resource, and a power for the communication is obtained by the first device through the power harvesting.

2. The method of claim 1, wherein the first time-domain resource is a periodic time-domain resource.

3. The method of claim 1 or 2, wherein the first time-domain resource is predefined, or is configured by a network device, or is negotiated between the first device and the second device.

4. The method of claim 3, wherein
a period of the first time-domain resource is predefined, or is configured by the network device, or is negotiated between the first device and the second device;
a time offset of the first time-domain resource within the period is predefined, or is configured by the network device, or is negotiated between the first device and the second device; and
a duration of the first time-domain resource within the period is predefined, or is configured by the network device, or is negotiated between the first device and the second device.

5. The method of any one of claims 1 to 4, wherein the first time-domain resource is determined when establishing a connection between the first device and the second device.

6. The method of any one of claims 1 to 5, wherein the first time-domain resource is determined based on at least one of the following:
a power harvesting capability of the first device;
a power storage capability of the first device; or
intensity information of a power harvesting source of the first device.

7. The method of any one of claims 1 to 6, wherein the first time-domain resource comprises at least one of the following:
a resource for the first device to transmit a signal; or
a resource for the first device to receive a signal.

8. The method of any one of claims 1 to 7, wherein performing, by the first device, the communication with the second device based on the first time-domain resource comprises:
performing, by the first device, the communication with the second device on the first time-domain resource when a power storage of the first device supports the first device to perform the communication.

9. The method of claim 8, wherein performing, by the first device, the communication with the second device on the first time-domain resource comprises at least one of the following:
transmitting, by the first device, a first signal to the second device on the first time-domain resource; or
receiving, by the first device, a second signal from the second device on the first time-domain resource.

10. The method of claim 9, wherein at least one of the following applies:
the first signal comprises first indication information, wherein the first indication information indicates that the first device requests a second time-domain resource, the second time-domain resource being used for the first device to perform a communication; or
the second signal comprises second indication information, wherein the second indication information indicates that the second device requests a second time-domain resource, the second time-domain resource being used for the second device to perform a communication.

11. The method of claim 10, wherein the first indication information indicates at least one of:
period information of the communication, duration information of the communication, a target data transmission volume, a power harvesting capability of the first device, a power storage capability of the first device, a duration required for the first device to recover a power, or spatial information for the communication.

12. The method of claim 10 or 11, wherein the second indication information indicates at least one of:
period information of the communication, duration information of the communication, a target data transmission volume, or spatial information for the communication.

13. The method of any one of claims 10 to 12, further comprising:
determining, by the first device, the second time-domain resource, wherein the second time-domain resource is used for the first device to perform the communication.

14. The method of claim 13, wherein the second time-domain resource is configured by the second device for the first device.

15. The method of claim 13 or 14, wherein the second time-domain resource is determined by the first device based on the first indication information or the second indication information.

16. The method of claim 15, wherein the second time-domain resource is determined based on a first timer and a second timer, wherein the first device is able to perform the communication during running of the first timer, the first device does not perform the communication during running of the second timer, and durations of the first timer and the second timer are determined based on the first indication information or the second indication information.

17. The method of any one of claims 13 to 16, wherein
the second time-domain resource is a periodic time-domain resource; or
the second time-domain resource is an aperiodic time-domain resource.

18. The method of any one of claims 13 to 16, further comprising:
performing, by the first device, no communication with the second device on a time-domain resource that is outside of the first time-domain resource and does not belong to the second time-domain resource.

19. The method of any one of claims 10 to 18, further comprising:
when a first condition is met, falling back, by the first device, from a communication based on the second time-domain resource to the communication based on the first time-domain resource.

20. The method of claim 19, wherein the first condition comprises at least one of:
the first device has received third indication information transmitted by the second device, wherein the third indication information indicates an end of the communication or indicates a fallback to the communication based on the first time-domain resource;
the first device transmits fourth indication information to the second device, wherein the fourth indication information indicates the end of the communication or indicates the fallback to the communication based on the first time-domain resource;
a third timer has expired, wherein the first device performs the communication based on the second time-domain resource during running of the third timer;
the first device has received feedback information regarding a signal reception from the second device; or
the first device transmits feedback information regarding a signal reception to the second device.

21. A method for wireless communication, comprising:
performing, by a second device, a communication with a first device on a first time-domain resource, wherein the first time-domain resource is a preset time-domain resource, a power for the communication is obtained by the first device through a power harvesting, and the power harvesting and the communication are not simultaneously performed by the first device.

22. The method of claim 21, wherein the first time-domain resource is a periodic time-domain resource.

23. The method of claim 21 or 22, wherein the first time-domain resource is predefined, or is configured by a network device, or is negotiated between the first device and the second device.

24. The method of claim 23, wherein
a period of the first time-domain resource is predefined, or is configured by the network device, or is negotiated between the first device and the second device;
a time offset of the first time-domain resource within the period is predefined, or is configured by the network device, or is negotiated between the first device and the second device; and
a duration of the first time-domain resource within the period is predefined, or is configured by the network device, or is negotiated between the first device and the second device.

25. The method of any one of claims 21 to 24, wherein the first time-domain resource is determined when establishing a connection between the first device and the second device.

26. The method according to any one of claims 21 to 25, wherein the first time-domain resource is determined based on at least one of the following:
a power harvesting capability of the first device;
a power storage capability of the first device; or
intensity information of a power harvesting source of the first device.

27. The method of any one of claims 21 to 26, wherein the first time-domain resource comprises at least one of the following:
a resource for the first device to transmit a signal; or
a resource for the first device to receive a signal.

28. The method of any one of claims 21 to 27, wherein performing, by the second device, the communication with the first device on the first time-domain resource comprises at least one of the following:
receiving, by the second device, a first signal from the first device on the first time-domain resource; or
transmitting, by the second device, a second signal to the first device on the first time-domain resource.

29. The method of claim 28, wherein at least one of the following applies:
the first signal comprises first indication information, wherein the first indication information indicates that the first device requests a second time-domain resource, the second time-domain resource being used for the first device to perform the communication; or
the second signal comprises second indication information, wherein the second indication information indicates that the second device requests a second time-domain resource, the second time-domain resource being used for the second device to perform a communication.

30. The method of claim 29, wherein the first indication information indicates at least one of:
period information of the communication, duration information of the communication, a target data transmission volume, a power harvesting capability of the first device, a power storage capability of the first device, a duration required for the first device to recover a power, or spatial information for the communication.

31. The method of claim 29 or 30, wherein the second indication information indicates at least one of:
period information of the communication, duration information of the communication, a target data transmission volume, or spatial information for the communication.

32. The method of any one of claims 29 to 31, further comprising:
determining, by the second device, the second time-domain resource, wherein the second time-domain resource is used for the second device to perform the communication.

33. The method of claim 32, wherein the second time-domain resource is determined by the second device based on the first indication information or the second indication information.

34. The method of claim 33, wherein the second time-domain resource is determined based on a first timer and a second timer, wherein the first device is able to perform the communication during running of the first timer, the first device does not perform the communication during running of the second timer, and durations of the first timer and the second timer are determined based on the first indication information or the second indication information.

35. The method of any one of claims 32 to 34, further comprising:
transmitting, by the second device, first configuration information to the first device, wherein the first configuration information is used for configuring the second time-domain resource.

36. The method of any one of claims 32 to 35, wherein
the second time-domain resource is a periodic time-domain resource; or
the second time-domain resource is an aperiodic time-domain resource.

37. The method of any one of claims 32 to 36, further comprising:
performing, by the second device, no communication with the first device on a time-domain resource that is outside of the first time-domain resource and does not belong to the second time-domain resource.

38. The method of any one of claims 30 to 37, further comprising:
when a second condition is met, falling back, by the second device, from a communication with the first device based on the second time-domain resource to the communication with the first device based on the first time-domain resource.

39. The method of claim 38, wherein the second condition comprises at least one of:
the second device transmits third indication information to the first device, wherein the third indication information indicates an end of the communication or indicates a fallback to the communication based on the first time-domain resource;
the second device has received fourth indication information transmitted by the first device, wherein the fourth indication information indicates the end of the communication or indicates the fallback to the communication based on the first time-domain resource;
a third timer has expired, wherein the second device performs the communication with the first device based on the second time-domain resource during running of the third timer;
the second device has received feedback information regarding a signal reception from the first device; or
the second device transmits feedback information regarding a signal reception to the first device.

40. A communication device, wherein the communication device does not simultaneously perform a power harvesting and a communication, and the communication unit comprises:
a communication unit, configured to perform the communication with a second device based on a first time-domain resource, wherein the first time-domain resource is a preset time-domain resource, and a power for the communication is obtained by the communication device through the power harvesting.

41. The communication device of claim 40, wherein the first time-domain resource is a periodic time-domain resource.

42. The communication device of claim 40 or 41, wherein the first time-domain resource is predefined, or is configured by a network device, or is negotiated between the communication device and the second device.

43. The communication device of claim 42, wherein
a period of the first time-domain resource is predefined, or is configured by the network device, or is negotiated between the communication device and the second device;
a time offset of the first time-domain resource within the period is predefined, or is configured by the network device, or is negotiated between the communication device and the second device; and
a duration of the first time-domain resource within the period is predefined, or is configured by the network device, or is negotiated between the communication device and the second device.

44. The communication device of any one of claims 40 to 43, wherein the first time-domain resource is determined when establishing a connection between the communication device and the second device.

45. The communication device of any one of claims 40 to 44, wherein the first time-domain resource is determined based on at least one of the following:
a power harvesting capability of the communication device;
a power storage capability of the communication device; or
intensity information of a power harvesting source of the communication device.

46. The communication device of any one of claims 40 to 45, wherein the first time-domain resource comprises at least one of the following:
a resource for the communication device to transmit a signal; or
a resource for the communication device to receive a signal.

47. The communication device of any one of claims 40 to 46, wherein the communication unit is further configured to:
perform the communication with the second device on the first time-domain resource when a power storage of the communication device supports the communication device to perform the communication.

48. The communication device of claim 47, wherein the communication unit is further configured to perform at least one of:
transmit a first signal to the second device on the first time-domain resource; or
receive a second signal from the second device on the first time-domain resource.

49. The communication device of claim 48, wherein at least one of the following applies:
the first signal comprises first indication information, wherein the first indication information indicates that the communication device requests a second time-domain resource, the second time-domain resource being used for the communication device to perform a communication; or
the second signal comprises second indication information, wherein the second indication information indicates that the second device requests a second time-domain resource, the second time-domain resource being used for the second device to perform a communication.

50. The communication device of claim 49, wherein the first indication information indicates at least one of:
period information of the communication, duration information of the communication, a target data transmission volume, a power harvesting capability of the communication device, a power storage capability of the communication device, a duration required for the communication device to recover a power, or spatial information for the communication.

51. The communication device of claim 49 or 50, wherein the second indication information indicates at least one of:
period information of the communication, duration information of the communication, a target data transmission volume, or spatial information for the communication.

52. The communication device of any one of claims 49 to 51, further comprising:
a processing unit, configured to determine the second time-domain resource, wherein the second time-domain resource is used for the communication device to perform the communication.

53. The communication device of claim 52, wherein the second time-domain resource is configured by the second device for the communication device.

54. The communication device of claim 52 or 53, wherein the second time-domain resource is determined by the communication device based on the first indication information or the second indication information.

55. The communication device of claim 54, wherein the second time-domain resource is determined based on a first timer and a second timer, wherein the communication device is able to perform the communication during running of the first timer, the communication device does not perform the communication during running of the second timer, and durations of the first timer and the second timer are determined based on the first indication information or the second indication information.

56. The communication device of any one of claims 52 to 55, wherein
the second time-domain resource is a periodic time-domain resource; or
the second time-domain resource is an aperiodic time-domain resource.

57. The communication device of any one of claims 52 to 55, wherein the communication unit is further configured to:
perform no communication with the second device on a time-domain resource that is outside of the first time-domain resource and does not belong to the second time-domain resource.

58. The communication device of any one of claims 49 to 57, wherein the communication unit is further configured to:
when a first condition is met, fall back from a communication based on the second time-domain resource to the communication based on the first time-domain resource.

59. The communication device of claim 58, wherein the first condition comprises at least one of:
the communication device has received third indication information transmitted by the second device, wherein the third indication information indicates an end of the communication or indicates a fallback to the communication based on the first time-domain resource;
the communication device transmits fourth indication information to the second device, wherein the fourth indication information indicates the end of the communication or indicates the fallback to the communication based on the first time-domain resource;
a third timer has expired, wherein the communication device performs the communication based on the second time-domain resource during running of the third timer;
the communication device has received feedback information regarding a signal reception from the second device; or
the communication device transmits feedback information regarding a signal reception to the second device.

60. A communication device, comprising:
a communication unit, configured to perform a communication with a first device on a first time-domain resource, wherein the first time-domain resource is a preset time-domain resource, a power for the communication is obtained by the first device through a power harvesting, and the power harvesting and the communication are not simultaneously performed by the first device.

61. A communication device, comprising: a processor and a memory, wherein the memory is configured to store a computer program, and the processor is configured to call the computer program from the memory and run the computer program, to perform the method of any one of claims 1 to 20, or the method of any one of claims 21 to 39.

62. A chip, comprising: a processor configured to call a computer program from a memory and run the computer program, to cause a device equipped with the chip to perform the method of any one of claims 1 to 20, or the method of any one of claims 21 to 39.

63. A computer-readable storage medium, configured to store a computer program, wherein the computer program causes a computer to perform the method of any one of claims 1 to 20, or the method of any one of claims 21 to 39.

64. A computer program product, comprising computer program instructions, wherein the computer program instructions cause a computer to perform the method of any one of claims 1 to 20, or the method of any one of claims 21 to 39.

65. A computer program causing a computer to perform the method of any one of claims 1 to 20, or the method of any one of claims 21 to 39.
